# EUROPÄISCHE PATENTANMELDUNG

(11) **EP 0 556 568 A1**
(43) Veröffentlichungstag der Anmeldung: **25.08.1993**
(21) Anmeldenummer: 93100656.3
(22) Anmeldetag: 18.01.1993
(51) Int. Cl.: F02G 5/02, F22B 27/12

(54) **Antriebsaggregat, insbesondere für Kraftfahrzeuge**

(30) Priorität: 21.02.1992 DE 4205240
(71) Anmelder: Dr.Ing.h.c. F. Porsche Aktiengesellschaft, D-70435 Stuttgart (DE)
(72) Erfinder: Striebich, Helmut, W-7500 Karlsruhe 41 (DE)

(57) **Zusammenfassung**

Dieses Antriebsaggregat (1) umfasst eine Brennkraftmaschine (2) und eine Abwärmeturbineneinheit (3), in der die im Abgas enthaltenen Energien genutzt werden.

Die Abwärmeturbineneinheit (3) ist mit einem rotierenden, als Hohlkörper ausgebildeten Zylinder (15) versehen, der an der Außenseite (23) von den Abgasen der Brennkraftmaschine (2) beaufschlagt wird. Der Innenseite (22) des Zylinders ist mittels einer Einrichtung (21) flüssiges, in Dampf umwandelbares Medium zuführbar, das unter Leistungsabgabe in einer Dampfturbine (18) expandiert. Die gewonnene Leistung wird der Kurbelwelle (11) der Brennkraftmaschine (2) mittels eines Getriebes (14) zugeführt.

## Beschreibung

Die Erfindung betrifft ein Antriebsaggregat nach dem Oberbegriff des Patentanspruchs 1.

Es ist ein Verfahren zur Rückgewinnung der Verlustenergie von Brennkraftmaschinen in Verbindung mit einer Abgasturbine, einem Dampferzeuger und einer Dampfkraftmaschine bekannt, AT-PS 138 943, bei dem der Druck der Abgase der Brennkraftmaschine zuerst in der Abgasturbine verwertet und danach die Wärme der Abgase zur Erhitzung des Kühlmittels ausgenutzt werden. Als nachteilig hat sich bei diesem Verfahren jedoch erwiesen, daß die Ausnutzung der Abgaswärme unwesentlich die effektive Leistung der Brennkraftmaschine beeinflusst und die Wärmeenergiemenge der Abgase beim Erhitzen des Kühlwassers erheblich kleiner ist als die Wärmeenergiemenge, die in den Abgasen beim Eintreten in das Abgassystem unmittelbar hinter der Brennkraftmaschine vorhanden war.

Darüber hinaus ist ein gattungsgemäßes Antriebsaggregat bekannt, DE-33 26 992 C1, das eine Brennkraftmaschine und eine Abwärmeturbineneinheit umfasst, in der die in dem Abgas enthaltenen Energien genutzt werden. Dieses Antriebsaggregat bietet bereits beachtliche Potentiale zur Nutzung der Abgaswärmeenergie einer Brennkraftmaschine.

Aufgabe der Erfindung ist es, besagtes Antriebsaggregat weiterzuentwickeln, um den Kraftstoffverbrauch und die Leistung von gegebenen bzw. kleinvolumigeren Brennkraftmaschine zu optimieren.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß eine vorhandene Brennkraftmaschine, die mit der Abwärmeeinheit ausgestattet ist, einen ebenfalls vorhandenen PKW wesentlich besser beschleunigt und dabei deutlich weniger Kraftstoff verbraucht. Untersuchungen haben ergeben, daß die Leistung einer Vierzylinder-Brennkraftmaschine, Bauart Otto, mit 3000 ccm Hubraum mit der Abwärmeeinheit 170 Kw leistet; ohne Abwärmeeinheit 150 Kw. Dabei wird bei höherer Leistung ihr Kraftstoffverbrauch im ECE-Test (= European City Economy Test) um ca. 15 % reduziert. Wird das Hubvolumen dieser Brennkraftmaschine aus Verbrauchsgründen reduziert, so weist sie eine Elastizität auf, die mit der einer Brennkraftmaschine mit entsprechend höherem Hubvolumen vergleichbar ist.

Die Ausbildung des Zylinders als Gegenstrom-Wärmetauscher bewirkt eine partielle Speicherung der Abgasenergie, d.h. es entsteht ein Temperaturgefälle zwischen Abgaseintritt und Abgasaustritt. Dies wiederum unterstützt die gute Funktion der Abwärmeeinheit, wobei der Gegenstrom-Wärmetauscher sich am Zylinder und dem ihn umgebenden Gehäuse aufgrund der gegebenen Raumverhältnisse teleologisch verwirklichen lässt.

Dank der konischen Gestaltung der Innenseite des Zylinders kann die gespeicherte Wärmemenge gezielt freigesetzt werden; denn durch die Steuerung der Pumpe wird eine definierte Flutung an dieser Innenseite erreicht.

Die Oberfläche der Außenseite des Zylinders bildet durch die Verrippung - Nadelrippen, Spiralrippen oder dergleichen - oder die katalytische Beschichtung einen Katalysator, der, weil ja geregelt gekühlt - innere Kühlung durch Verdampfung - nahe am Zylinderkopf angebracht werden kann, was sich günstig auf sein Anspringverhalten auswirkt. Außerdem kann durch die Kühlfunktion das Alterungsverhalten des Katalysators positiv beeinflusst werden. Schließlich werden die Gaswechselströme der Brennkraftmaschine durch die Oberfläche des Zylinders, gegebenenfalls durch Hinzufügen von Umlenkblechen, Lochtraufen oder dergleichen, derart geglättet, daß die Abwärmeturbineneinheit auch noch als Schalldämpfer wirkt. Bei entsprechender Konzeption der Abwärmeturbineneinheit können die sonst üblichen Aufwendungen für Katalysator und Abgasanlage zumindest reduziert werden.

In der Zeichnung wird ein Ausführungsbeispiel der Erfindung gezeigt, das nachstehend näher beschrieben ist.
Es zeigt
- Fig. 1: eine Ansicht von oben auf ein Antriebsaggregat für Kraftfahrzeuge
mit
einer Brennkraftmaschine und einer Abwärmeeinheit,
- Fig. 2: eine Seitenansicht des Antriebsaggregats,
- Fig. 3: eine Ansicht in Pfeilrichtung A der Fig. 2,

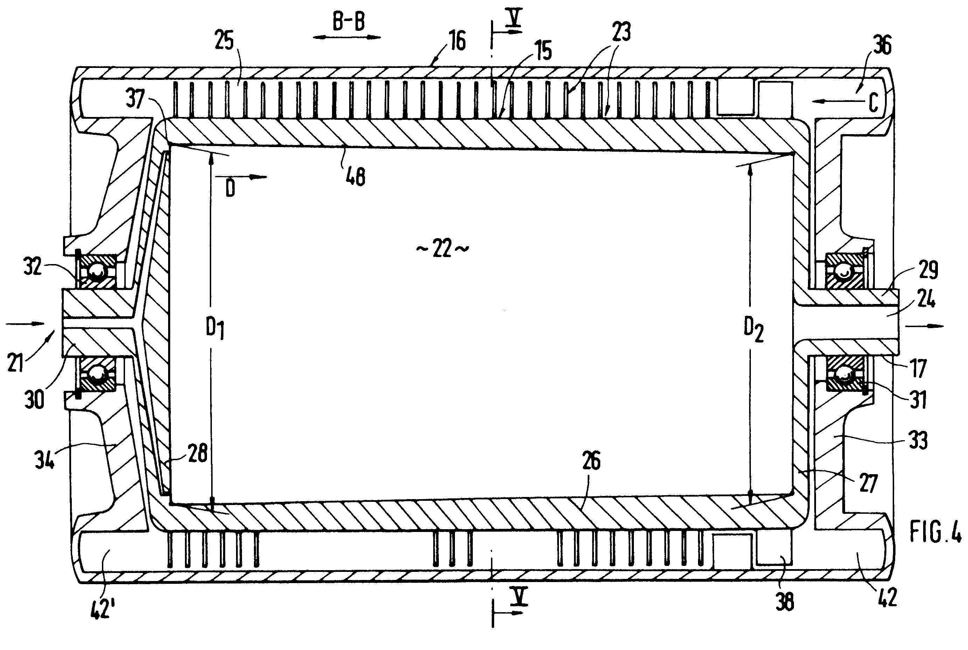

- Fig. 4: eine Einzelheit X der Fig. 3 in größerem Maßstab,
- Fig. 5: einen Schnitt nach der Linie V-V der Fig. 4 in größerem Maßstab,
- Fig. 6 und 7: Teilschrägansichten der Fig. 5,
- Fig. 8: ein Diagramm über den Temperaturverlauf der gespeicherten Wärmeenergie in einem Zylinder der Abwärmeeinheit.

Das Antriebsaggregat 1, das ein Kraftfahrzeug antreibt oder gegebenenfalls im stationären Betrieb arbeitet, umfasst eine wassergekühlten Brennkraftmaschine 2 und eine Abwärmeeinheit 3. Die Abwärmeeinheit 3 ist an Auslaßkanäle 4 der vier Zylinder 5/I, 5/II, 5/III und 5/IV aufweisenden Brennkraftmaschine 2 angeschlossen. Sie, Bauart Otto, wird gebildet durch einen Grundkörper 6, ein Zylinderkurbelgehäuse 7 und einen Zylinderkopf 8. In jedem Zylinder z.B. 5/I ist ein Kolben 9 axialbeweglich geführt, der mittels einer Pleuelstange 10 an eine Kurbelwelle 11 angeschlossen ist.

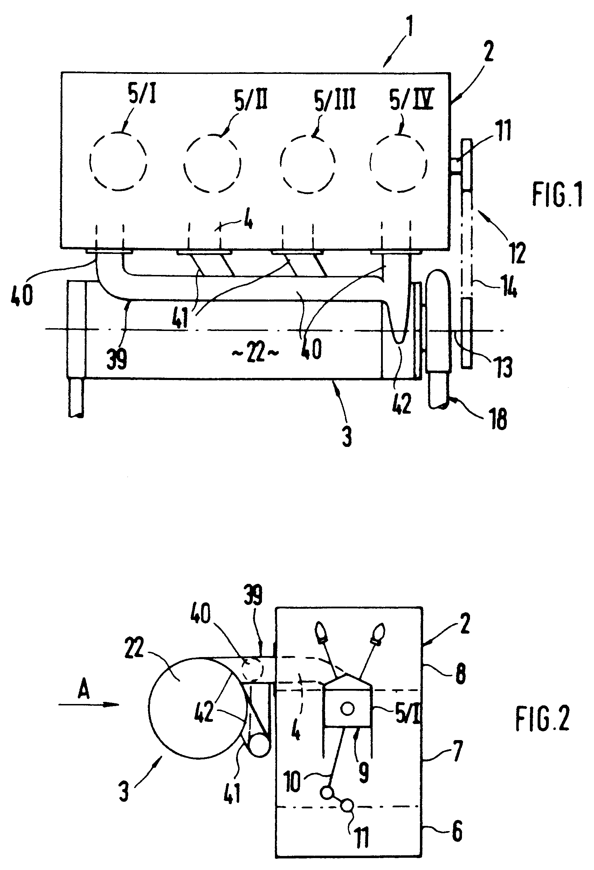

Die Abwärmeeinheit dient zur Nutzung der dem Abgas der Brennkraftmaschine 2 innewohnenden Energien, wobei die gewonnene Leistung - sie kann zur Leistungssteigerung und/oder Verbrauchsreduzierung eingesetzt werden - bei 12 der Brennkraftmaschine 2, vorzugsweise deren Kurbelwelle 11 zugeführt wird. Hierzu ist zwischen einer Leistung abgebenden Ausgangswelle 13 und der Kurbelwelle 11 ein Getriebe 14 vorgesehen, das im Ausführungsbeispiel ein Endlostrieb - Kette, Zahnriemen oder dergleichen - ist (Fig. 1).

Die Abwärmeeinheit 3 umfasst einen rotierenden, als Hohlkörper ausgebildeten Zylinder 15 mit kreisförmigem Querschnitt, wobei der Zylinder 15 aus einer Aluminiumlegierung besteht und in einem ebenfalls kreisförmigen Querschnitt aufweisenden Gehäuse 16 z.B. metallischen Werkstoffs, angeordnet ist.

Außerdem ist der Zylinder 15 über eine Welle 17 mit einer ihm nachgeschalteten Dampfturbine 18 verbunden, die die Ausgangswelle 13 mittels des Getriebes 14 antreibt. Der Dampfturbine 18 nachgeschaltet ist ein Kondensator 19, eine Pumpe 20 und eine Einrichtung 21, mit der beim Betrieb der Brennkraftmaschine 2 dem Innenraum 22 des Zylinders 15 flüssiges Medium zuführbar ist, das bei, durch den Zylinder 15 gespeicherter Wärmeenergie, die ihm an seiner Außenseite 23 über die Abgase zugeführt wird, verdampft und unter Leistungsabgabe in der Dampfturbineneinheit 18 expandiert. Über eine Bohrung 24 tritt das verdampfte Medium in die Dampfturbine 18 ein. Das Medium kann in einem geschlossenen Kreislauf zirkulieren oder aber dem Kühlmittel der Brennkraftmaschine 2 entnommen werden.

Zwischen dem Gehäuse 16 und der Außenseite 23 des Zylinders 15 ist ein Ringraum 25 vorgesehen, der zur axialen Führung der Brennkraftmaschinenabgase ausgebildet ist. Dadurch speichert der Zylinder 15, der möglichst nahe am Zylinderkopf 18 angeordnet ist, bei instationärem Teilbereich der Brennkraftmaschine 2 einen wesentlichen Teil ihrer Abgaswärmeenergie, die zur Aktivierung des Dampfprozesses unter anderem bei erhöhter Leistungsanforderung an die Brennkraftmaschine genutzt wird.

Der Zylinder 15 ist ein allseits geschlossener Körper mit einer Zylinderwand 26, deren beide Enden mit einer ersten Stirnwand 27 und einer zweiten Stirnwand 28 versehen ist. Die Stirnwände 27 und 28 tragen Lagerwellen 29, 30, die mit Kugellagern 31, 32 von Gehäusestirnwänden 33, 34 zusammenwirken. Das Gehäuse 16 ist somit ebenfalls ein allseits geschlossener Körper.

Der Zylinder 15 und das Gehäuse 16 sind als ein Gegenstrom-Wärmetauscher 35 ausgebildet. Dabei beaufschlagen die Abgase der Brennkraftmaschine 2, in axialer Richtung B des Zylinders 15 gesehen, die Außenseite 23 von einer ersten, quer zur axialen Richtung B-B verlaufenden Seite 36 aus in Richtung C, und das verdampfbare Medium wird von einer zweiten beabstandeten Seite 37 aus - sie verläuft parallel zur Seite 36 - mittels der Einrichtung 21 in Richtung D eingebracht.

Die Abgase können über ein Turbinenrad 38 dem Ringraum zugeführt werden, wobei diese Turbinenrad fest mit dem Zylinder 15 verbunden ist. Die Abgase der Zylinder 5/I, 5/II, 5/III und 5/IV werden gebündelt zum Turbinenrad 38 mittels einer Abgasleitung 39 der Brennkraftmaschine 2 geführt. Diese Abgasleitung 39 umfasst Leitungsabschnitte 40, 41, durch die die Abgase einzelner Zylinder gruppenweise zusammengefasst und über einen Abgaseingang 42 in den Gegenstrom-Wärmetauscher geleitet werden. So können z.B. die Zylinder 5/I und 5/IV und die Zylinder 5/II und 5/III jeweils eine Gruppe bilden. Ihre Abgase strömen durch die Abgasleitungsabschnitte 40 bzw. 41 zum Abgaseingang 42.

Damit die Abgasenergie der Brennkraftmaschine möglichst umfassend genutzt wird, ist die Abgasleitung 39 gegen Wärmeabstrahlung durch geeignete Mittel isoliert.

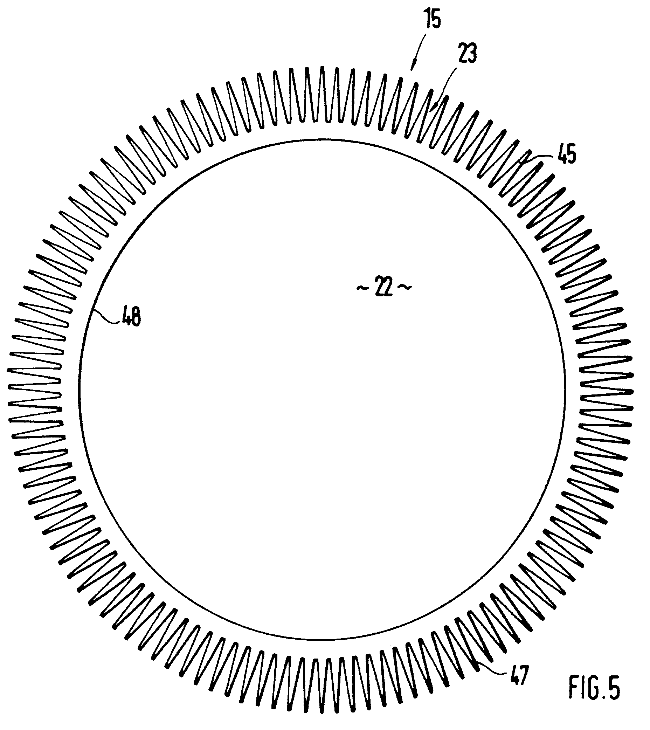

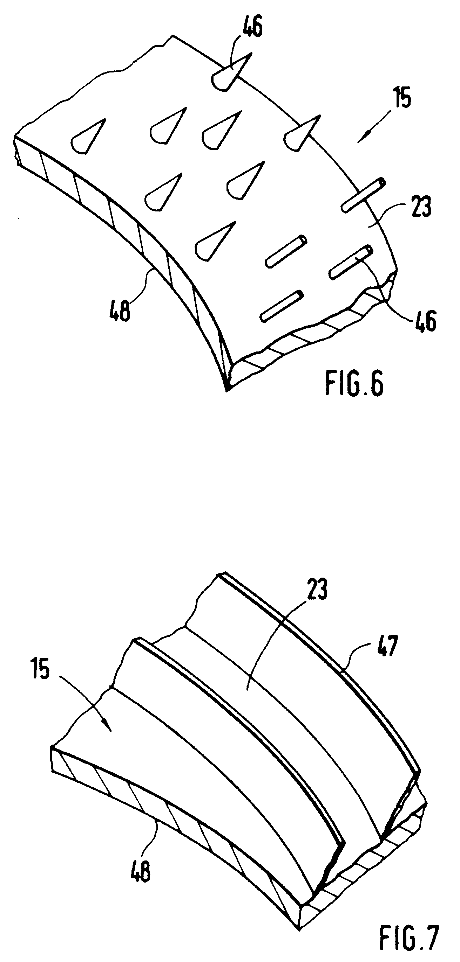

Die Außenseite 23 des Zylinders 15 ist zur gezielten Wärmeübertragung mit seine Oberfläche vergrößernden Keilrippen 45 (Fig. 5) versehen. Anstelle der Keilrippen 45 können auch andere Rippen, z.B. Nadelrippen 46 kreiszylindrischer oder kegelförmiger Art (Fig. 6) oder Spiralrippen 47 (Fig. 7) vorgesehen sein.

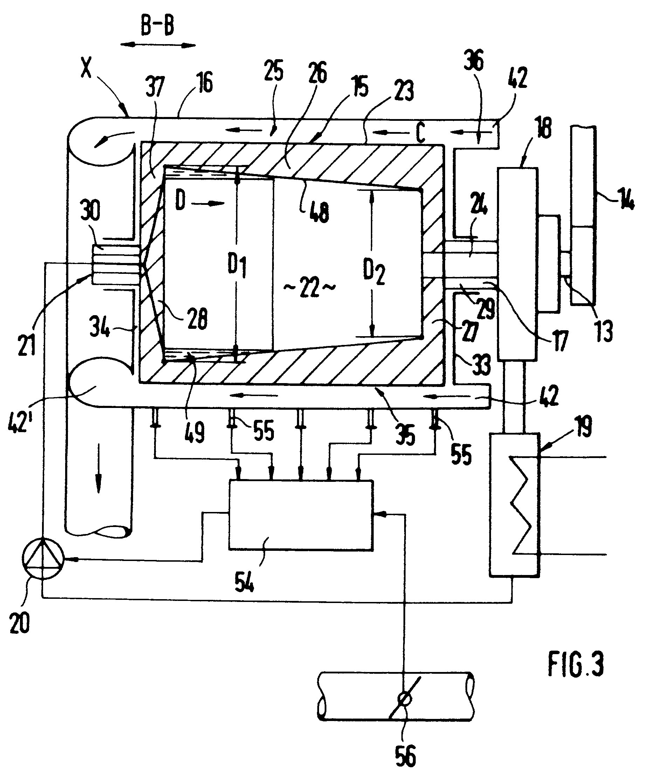

Der Innenraum 22 des Zylinders 15 bzw. seine Innenseite 48 verjüngt sich in axialer Richtung B-B gesehen konisch. Dabei ist der Durchmesser D₁ im Bereich der zweiten Stirnwand 28 größer als der Innendurchmesser D₂, benachbart der ersten Stirnwand 27. Die konische Verjüngung der Innenseite 22 liegt in der Größenordnung von 1 : 25 bis 1 : 35. Durch diese relativ kleine Konizität kann die Flutung des Zylinders gesteuert und die gespeicherte Wärmeenergie gezielt zur Dampferzeugung freigesetzt werden (Fig. 3 Mediumspiegel 49). Darüber hinaus ist die Oberfläche der Außenseite 23 des Zylinders bezüglich Größe optimiert und mit einer katalytischen Beschichtung versehen, so daß die Abwärmeeinheit 3 auch als Katalysator wirkt.

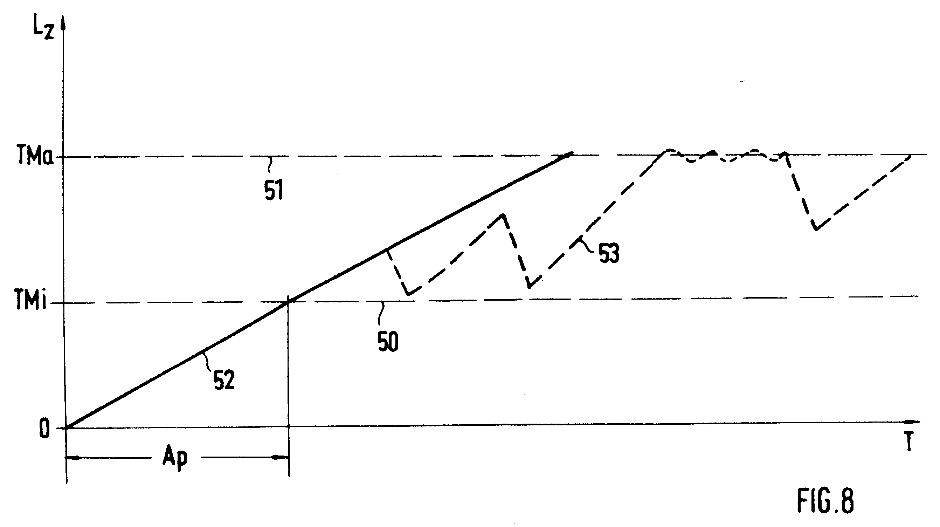

Die Fig. 8 gibt ein Diagramm wieder, aus dem die gespeicherte Wärmemenge des Zylinders 15 hervorgeht. Auf der Ordinate ist der Ladezustand L_{z} (oder Temperaturverlauf) des Zylinders 15 aufgetragen; auf der Abszisse die Zeit T. Die erste untere horizontale Linie 50 gibt ein Temperaturmaximum TMi des Ladezustands des Zylinders 15 wieder; die zweite obere horizontale Linie 51 ein Temperaturmaximum TMa. Die Linie 52 steigt von 0 an, schneidet nach einer Aufheizphase Ap des Zylinders 15 die Linie 50, um schließlich die Linie 51 zu erreichen. Eine Linie 53 veranschaulicht die Auswirkungen, wenn einerseits das flüssige Medium in einem Bereich zwischen dem Temperaturminimum TMi und Temperaturmaximum TMa eingespritzt wird und andererseits das bei Erreichen des Temperaturmaximums TMa geregelt eingespritzt wird, um Überhitzungen des Kessels 15 zu vermeiden.

Zur Steuerung und/oder Regelung der Abwärmeeinheit 3 ist ein Steuergerät 54 mittels Temperatursensoren 55 an den Gegenstrom-Wärmetauscher 35 angeschlossen (Fig. 3). Das Steuergerät 54 wiederum ist mit einer Drosselklappe 56 der Brennkraftmaschine 2 und der Pumpe 20 verbunden.

### Funktionsbeschreibung

Für den Betrieb der Abwärmeeinheit 3 gibt es drei verschiedene Betriebszustände:

### Betriebszustand I

Der Wärmeenergie-Ladezustand des Zylinders 15 liegt unterhalb des Temperaturminimums TMi.
Nach dem Anlassen der Brennkraftmaschine 2 wird der Zylinder 15 durch die Abgase aufgeheizt. Es entsteht ein Temperaturgefälle zwischen Abgaseingang 42 und Abgasausgang 42'. Während der Aufheizphase Ap erfolgt keine Einspritzung des flüssigen Mediums. Durch die Sensoren 54 wird der Ladezustand (= gespeicherte Wärmeenergie) des Zylinders ermittelt. Sobald der Zylinder 15 das Temperaturminimum TMi erreicht hat, sind das Steuergerät 54 und die Pumpe 20 aktivierbar.

### Betriebszustand II

Der Wärmeenergie-Ladezustand des Zylinders 15 liegt zwischen dem Temperaturminimum TMi und dem Temperaturmaximum TMa.
Die Einspritzung des flüssigen Mediums erfolgt bei erhöhter Leistungsanforderung (Beschleunigung) an die Brennkraftmaschine 2. Als Führungsgröße dient das Winkelgebersignal der Drosselklappe 56. Die Einspritzmenge des flüssigen Mediums, gegebenenfalls auch die Einspritzzeit, wird durch den Drosselklappenwinkel, dessen Verstellgeschwindigkeit und dessen Verstellgröße festgelegt. Das nun verdampfte Medium tritt in die Turbine 18 ein, wodurch über einen definierten Zeitraum über die Turbine 18 und das Getriebe 14 der Brennkraftmaschine 2 Leistung zugeführt wird. Sie hat jetzt die Funktion einer Beschleunigungshilfe, auch Booster genannt.

### Betriebszustand III

Der Wärmeenergie-Ladezustand des Zylinders 15 erreicht das Temperaturmaximum TMa.
Die Einspritzmenge des flüssigen Mediums wird so geregelt, daß das Temperaturmaximum TMa erhalten bleibt. Dabei ist sichergestellt, daß der Zylinder 15 nicht überhitzt wird, was auch im Hinblick auf seine Katalysatorfunktion von Bedeutung ist.

## Patentansprüche

1. Antriebsaggregat, insbesondere für Kraftfahrzeuge mit einer Brennkraftmaschine und einer Abwärmeeinheit zur Abgasenergieverwertung, die eine Dampfturbine umfasst, in der ein durch Abgaswärme aus einem verdampfbaren flüssigen Medium erzeugter Dampf unter Arbeitsabgabe expandiert, welche Abwärmeeinheit einen rotierenden, als Hohlkörper ausgebildeten Zylinder, der an seiner Außenseite von den Abgasen beaufschlagt wird, eine Einrichtung zur Zufuhr des verdampfbaren flüssigen Mediums in den Innenraum des Zylinders, Mittel zur Weiterleitung des erzeugten Dampfes aus dem Zylinder in die nachgeschaltete Dampfturbine und ein Gehäuse, in dem zumindest der Zylinder gelagert ist, aufweist, **dadurch gekennzeichnet**, daß die Abgase der Brennkraftmaschine (2) den Zylinder (15) derart beaufschlagen, daß er bei instationärem Teillastbereich der Brennkraftmaschine (2) als Wärmeenergiespeicher ausgebildet ist und der Dampfprozeß bei erhöhter Leistungsanforderung an die Brennkraftmaschine (2) aktiviert wird.

2. Antriebsaggregat nach Anspruch 1, **dadurch gekennzeichnet**, daß der Zylinder (15) und das ihn umgebende Gehäuse (16) nach Art eines Gegenstrom-Wärmetauschers (35) ausgebildet sind, dergestalt, daß - in axialer Richtung B-B des Zylinders (15) gesehen - die Abgase die Außenseite (23) des Zylinders von einer ersten Seite (36) aus (in Richtung C) beaufschlagen und daß das verdampfbare Medium von einer zweiten gegenüberliegenden Seite (37) aus (in Richtung D) entgegen der Abgasstrom-Richtung mittels der Einrichtung (21) in den Innenraum (22) des Zylinders (15) eingebracht wird.

3. Antriebsaggregat mit einer mehrzylindrigen Brennkraftmaschine nach einem oder mehreren der vorangehenden Ansprüche, **dadurch gekennzeichnet**, daß die Abgase mehrerer Brennkraftmaschinen-Zylinder (5/I; 5/II; 5/III; 5/IV) über eine Abgasleitung (39) gebündelt benachbart der ersten Seite (36) dem Zylinder (15) der Abwärmeeinheit (3) zugeführt werden.

4. Antriebsaggregat nach Anspruch 3, **dadurch gekennzeichnet**, daß die Abgase einzelner Brennkraftmaschinen-Zylinder (z.B. 5/I mit 5/IV und 5/II mit 5/III) zusammengeführt sind und über Leitungsabschnitte (40, 41) der Abgasleitung (39) dem Zylinder (15) zugeführt werden.

5. Antriebsaggregat nach Anspruch 4, **dadurch gekennzeichnet**, daß die Abgasleitung (39) gegen Wärmestrahlung isoliert ist.

6. Antriebsaggregat nach einem oder mehreren der vorangehenden Ansprüche, **dadurch gekennzeichnet**, daß die Außenseite (23) des Zylinders (15) mit seine Oberfläche vergrößernden Vorrichtungen wie Keilrippen (45), Nadelrippen (46), Spiralrippen (47) oder dergleichen versehen ist.

7. Antriebsaggregat nach einem oder mehreren der vorangehenden Ansprüche, **dadurch gekennzeichnet**, daß sich die Innenseite (48) des Zylinders (15) zumindest über einen Teilbereich seiner axialen Länge (axiale Richtung B-B) konisch verjüngt, wobei der Innendurchmesser (D₁) im Bereich der zweiten Seite (37) größer ist als der Innendurchmesser (D₂) im Bereich der ersten Seite (36)

8. Antriebsaggregat nach Anspruch 7, **dadurch gekennzeichnet**, daß die Verjüngung der Innenseite (48) etwa in der Größe von 1 : 20 bis 1 : 40 liegt.

9. Antriebsaggregat nach Anspruch 8, **dadurch gekennzeichnet**, daß zur Erzielung einer Katalysatorwirkung die Oberfläche des Zylinders (15) an seiner Außenseite 23 bezüglich Größe optimiert ist, wobei diese Oberfläche mit einer katalytischen Beschichtung versehen ist.

10. Antriebsaggregat nach einem oder mehreren der vorangehenden Ansprüche, **dadurch gekennzeichnet**, daß der Zylinder (15) möglichst nahe an einem Zylinderkopf (8) der Brennkraftmaschine (2) angeordnet ist.

11. Antriebsaggregat, insbesondere für Kraftfahrzeuge mit einer Brennkraftmaschine und einer Abwärmeeinheit, die eine Dampfturbine umfasst, in der ein durch Abgaswärme aus einem verdampfbaren flüssigen Medium erzeugter Dampf unter Arbeitsabgabe expandiert, welche Abwärmeeinheit einen rotierenden, als Hohlkörper ausgebildeten Zylinder, der an seiner Außenseite von den Abgasen beaufschlagt wird, eine Einrichtung zur Zufuhr des verdampfbaren flüssigen Mediums in den Innenraum der Zylinders, Mittel zur Weiterleitung des erzeugten Dampfes aus dem Zylinder in die nachgeschaltete Dampfturbine und ein Gehäuse, in dem zumindest der Zylinder gelagert ist, aufweist,**dadurch gekennzeichnet**, daß der Zylinder (15) und das ihn umgebende Gehäuse (16) nach Art eines Gegenstrom-Wärmetauschers (35) ausgebildet sind, dergestalt, daß - in axialer Richtung B-B des Zylinders gesehen - die Abgase die Außenseite (23) des Zylinders (15) von einer ersten Seite (39) aus (in Richtung C) beaufschlagen und daß das verdampfbare Medium von einer zweiten gegenüberliegenden Seite aus (in Richtung D) entgegen der Abgasstrom-Richtung mittels der Einrichtung (20) in den Innenraum (22) eingebracht wird.

12. Antriebsaggregat nach einem oder mehreren der vorangehenden Ansprüche, bei dem das flüssige Medium mittels einer Pumpe in den Zylinder eingespritzt wird, die an ein temperaturabhängiges Steuergerät angeschlossen ist, **dadurch gekennzeichnet**, daß das Steuergerät (54) mit einem oder mehreren, die Temperatur des Gegenstrom-Wärmetauschers (35) messenden Temperatursensoren (55) zusammenwirkt und mittels eines Winkelgebersignals einer Drosselklappe (56) der Brennkraftmaschine (2) zur Einspritzung des flüssigen Mediums über die Pumpe (20) beeinflußbar ist.

13. Antriebsaggregat nach Anspruch 12, **dadurch gekennzeichnet**, daß das Steuergerät zwischen einem definierten Temperaturminimum (TMi) und einem definierten Temperaturmaximum (TMa) des Gegenstrom-Wärmetauschers (35) aktivierbar ist.

14. Antriebsaggregat nach einem oder mehreren der vorangehenden Ansprüche, **dadurch gekennzeichnet**, daß im Bereich des Temperaturmaximums (TMa) des Gegenstrom-Wärmetauschers (35) eine geregelte Einspritzung des flüssigen Mediums über die Pumpe (20) erfolgt.
